# EUROPEAN PATENT SPECIFICATION

(11) **EP 2 089 241 B1**
(45) Date of publication and mention of the grant of the patent: **16.11.2011**
(21) Application number: 07725609.7
(22) Date of filing: 28.05.2007
(51) Int. Cl.: B60C 9/00, B60C 9/20

(54) **TIRE HAVING A LIGHT WEIGHT BELT STRUCTURE**
REIFEN MIT LEICHTER GÜRTELSTRUKTUR
PNEUMATIQUE AYANT UNE STRUCTURE DE CEINTURE LÉGÈRE

(30) Priority: 22.11.2006 WO PCT/EP2006/011160
(43) Date of publication of application: 19.08.2009
(73) Proprietor: Pirelli Tyre S.p.A., 20126 Milano (IT)
(72) Inventor: DAGHINI, Guido, 20126 Milano (IT); TRESOLDI, Stefano, 20126 Milano (IT); RAMPANA, Barbara, 20126 Milan (IT); TIRELLI, Diego, 20126 Milano (IT); FANFANI, Simone, 50063 Figline Valdarno (IT)
(74) Representative: Bottero, Carlo
(86) International application number: PCT/EP2007/004714
(87) International publication number: WO 2008/061574

(56) References cited:
- EP-A- 1 033 435
- EP-A1- 1 277 874
- US-A- 4 240 486
- US-A- 4 333 507

## Description

### Field of the invention

This invention relates to a tire having a light weight belt structure.

More in particular, the present invention relates to a high performance tire such as, for example, a tire designed for high-powered cars or, more generally, a tire intended for applications involving high operating speeds and/or extreme driving conditions.

In more detail, the present invention relates to a high performance (HP) or ultra high performance (UHP) tire, as well as to a tire suitable for being employed in sporting contests such as track motor races.

In still more detail, the present invention relates to a tire comprising a belt structure including at least one belt layer, said at least one belt layer comprising at least one reinforcing cord comprising a core including at least one elongated element of composite material, said core being wrapped with at least one metal elongated element.

Moreover, the present invention also relates to a reinforcing cord comprising a core including at least one elongated element of composite material, said core being wrapped with at least one metal elongated element.

Furthermore, the present invention also relates to a rubberized reinforcing layer comprising at least one reinforcing cord comprising a core including at least one elongated element of composite material, said core being wrapped with at least one metal elongated element.

### Background of the invention

A tire for vehicle wheels generally comprises: a carcass structure including at least one carcass ply; a tread band in a position radially external to the carcass structure; a belt (or breaker) structure interposed between the carcass structure and the tread band. A tire, generally further comprises a pair of sidewalls applied to the carcass structure in axially opposite positions. The ends of said at least one carcass ply are turned back or secured to two annular reinforcing elements, i.e. the so-called "bead cores", and the tire region which comprises the bead core is known as "tire bead".

The belt structure, generally comprises one or more belt layers, arranged in a radially superposed relationship with each other and with the carcass structure, and having textile or metal reinforcing elongated element (such as wires and/or cords), said reinforcing elongated elements being parallel to each other in each belt layer and intersecting with respect to the adjacent belt layer.

Usually, in the case of the high performance tires above disclosed, the belt structure comprises two belt layers having steel reinforcing cords. Such a belt structure ensures good tire performances (e.g., good steering stability, good wear resistance). However, these tires generally show several problems in that the amount of steel used is high which increase the tires rolling resistance, the weight of the belt is high and the centrifugal force during the running becomes high to cause sideslip and decreasing in the high-speed durability. Moreover, rust formation may occur by the penetration of water and/or humidity to the exterior so causing tire breakage.

Attempts to substitute steel reinforcing cords in tires belt structures, have been already made in the art.

For example, United States Patent US 5,246,051 discloses a pneumatic radial tire including a belt comprised of plural belt layers wherein at least one belt layer is a rubberized layer of cords obtained by completely impregnating a substantially non-twisted bundle of filaments selected from aromatic polyamide filament, high-strength, and high modulus polyvinyl alcohol filament and carbon filament, with a thermoplastic or thermosetting resin, to form a filament-resin composite body. The abovementioned tire is said to have light weight and small rolling resistance. Moreover, it is said that the durability against belt breakage in the rapid turning is largely improved while maintaing high steering stability and also the resistance to belt cord breakage on a bad rod is improved.

United States Patent Application US 2002/0043319 discloses a tire, in particular an elastomeric pneumatic tire, comprising reinforcing elements, in which at least one reinforcing element is an elongate composite element of monofilament appearance, comprising substantially symmetrical technical fibers, said fibers being of great lengths, said fibers being impregnated in a thermoset resin having an initial modulus of extension of at least 2.3 GPa, in which said fibers are parallel to each other, said elongate composite element having an elastic deformation in compression at least equal to 2%, and having in flexion a breaking stress in compression greater than the breaking stress in extension. In a particular embodiment, said elongate composite element reinforces the part of the tire which is located beneath the tread. The abovementioned tire is said to have lower weight, excellent guidance and durability properties.

International Patent Application WO 2006/010658 discloses a reinforcing cord for elastomeric products, in particular for the ply belts of vehicle pneumatic tires, made from a non-metallic cord core, helically wound with at least one metallic filament. The non-metallic cord core may be formed of different textile yarns or cords, which will show sufficient extension properties in response to low load. Yarn or cords of polyamide (e.g., nylon 6.6, or nylon 6), polyester, or rayon, are said to be preferred. The metallic filaments to be wound around the cord core are said to preferably be brass-plated steel filaments. The abovementioned reinforcing cords, when used as a ply belt material for pneumatic vehicle tires, are said to allow to obtain tire showing exceptionally good high-speed properties.

### Summary of the invention

However, the Applicant observes that the above disclosed solutions may show some drawbacks.

In particular, the Applicant has noticed that the above reported reinforcing elements or cords, do not show sufficient breaking load, sufficient stiffness, sufficient elongation at break, as well as sufficient buckling resistance, in order to be advantageously used in tire manufacturing, in particular in a tire belt structure.

More in particular, the Applicant has noticed that using the above reported reinforcing elements or cords, a sufficient belt structure rigidity cannot be obtained as in the case of using steel reinforcing elements or cords. Consequently, the tire high speed properties such as, for example, tire steering stability and tire high speed durability, may be negatively affected.

Furthermore, the Applicant has noticed that, during a tire vulcanization step through which the inside of the tire is pressurized, for example, by means of an inflated tube, the belt structure elongation may become insufficient to press the tire against the mold and, as a result, sometimes the molding become incomplete and undesirable stress and/or strain reside in the belt structure, as well as in the tread band. Consequently, the tire high speed properties such as, for example, tire steering stability and tire high speed durability, may be negatively affected.

The Applicant has faced the problem of providing a tire, in particular a high performance tire, having a light weight and low rolling resistance without negatively affecting its high speed properties such as, for example, steering stability and high speed durability.

The Applicant has found that the above reported properties may be achieved by providing a tire with a belt structure comprising at least one belt layer, said at least one belt layer comprising at least one reinforcing cord comprising a core including at least one elongated element of composite material, said core being wrapped with at least one metal elongated element.

Moreover, the Applicant has found that said belt structure shows a sufficient elongation during the vulcanization step.

According to a first aspect, the present invention relates to a tire comprising:
- a carcass structure of a substantially toroidal shape, having opposite lateral edges terminating in respective bead structures;
- a belt structure applied in a radially external position with respect to said carcass structure, said belt structure comprising at least one belt layer;
- a tread band radially superimposed on said belt structure;
- a pair of sidewalls applied laterally on opposite sides with respect to said carcass structure;
wherein said at least one belt layer comprises at least one reinforcing cord comprising a core including at least one first elongated element comprising at least one composite material, said composite material including a plurality of elongated fibers embedded in a polymeric material, said core being wrapped with at least one second elongated element comprising at least one elementary metal wire wire, wherein said composite material has a flexural modulus, measured according to standard ASTM D790-03, at 23°C, not lower than or equal to 10 GPa**.**

According to a further aspect, the present invention also relates to a reinforcing cord comprising a core including at least one first elongated element comprising at least one composite material, said composite material including a plurality of elongated fibers embedded in a polymeric material, said core being wrapped with at least one second elongated element comprising at least one elementary metal wire.

According to a still further aspect, the present invention also relates to a rubberized reinforcing layer including at least one reinforcing cord comprising a core including at least one first elongated element comprising at least one composite material, said composite material including a plurality of elongated fibers embedded in a polymeric material, said core being wrapped with at least one second elongated element comprising at least one elementary metal wire.

The present invention, in at least one of the abovementioned aspects, may show one or more of the preferred characteristics hereinafter described.

According to one preferred embodiment, said at least one reinforcing cord comprises a core including at least two first elongated elements, said at least two first elongated elements being arranged in parallel to each other.

According to a further preferred embodiment, said at least one reinforcing cord comprises a core including at least three first elongated elements, said at least three first elongated elements being arranged in parallel to each other.

The presence of more than one first elongated element, allows to obtain a reinforcing cord having a sufficient stiffness to be used in a tire belt structure, in particular in a belt structure of a high performance tire.

For the aim of the present description and of the claims which follow, the expression "elongated elements arranged in parallel to each other", means that said elongated elements are not twisted, i.e. have an infinite lay length.

According to a further preferred embodiment, said core is wrapped with at least two second elongated elements, each one of said at least two second elongated elements comprising at least one elementary metal wire.

According to a further preferred embodiment, said core is wrapped with at least four second elongated elements, each one of said at least four second elongated elements comprising at least one elementary metal wire.

The presence of more than one second elongated element, allows to obtain a reinforcing cord having a sufficient breaking load to be used in a tire belt structure, in particular in a belt structure of a high performance tire.

Preferably, said second elongated elements, are parallely wound, in the same direction, around said core. Preferably, the parallel winding intersection points between said second elongated elements which may negatively affect the lifetime of the reinforcing cord, are avoided.

According to one preferred embodiment, said at least one second elongated element is made of a single elementary metal wire (i.e. a monofilament).

According to one preferred embodiment, said first elongated element has a diameter of from 0.1 mm to 1.0 mm, preferably of from 0.2 mm to 0.6 mm.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

According to one preferred embodiment, said second elongated element has a diameter of from 0.08 mm to 1.0 mm, preferably of from 0.1 mm to 0.6 mm.

According to one preferred embodiment, said reinforcing cord has a diameter of from 0.3 mm to 2.0 mm, preferably of from 0.5 mm to 1.2 mm.

According to one preferred embodiment, said second elongated element is wound around said core at a stranding pitch of from 2.5 mm to 30 mm, preferably of from 5 mm to 20 mm.

According to one preferred embodiment said reinforcing cord has an elongation at break, measured on the bare cord, higher than or equal to 0.8%, preferably of from 1.2% to 2.5%.

Said elongation at break is measured according to method BISFA - 95 (method E6) (1995). Further details about said measurements will be given in the examples which follow.

According to one preferred embodiment, said reinforcing cord has a stiffness, measured on the bare cord, higher than or equal to 8 tsu, preferably of from 12 tsu to 25 tsu.

Said stiffness is measured according to method BISFA - 95 (method E8 - Determination of Taber Stiffness) (1995). Further details about said measurements will be given in the examples which follow.

According to one preferred embodiment, said composite material has a flexural modulus, measured according to Standard ASTM D790-03, at 23°C, not lower than or equal to 10 GPa, preferably of from 20 GPa to 200 GPa.

Said flexural modulus allows to obtain a reinforcing cord having a sufficient stiffness to be used in a tire belt structure, in particular in a belt structure of a high performance tire.

According to a further preferred embodiment, said composite material has an ultimate tensile strength, measured according to Standard ASTM D3916-02, at 23°C, not lower than or equal to 600 MPa, preferably of from 1000 MPa to 2500 MPa.

Said ultimate tensile strength allows to obtain a reinforcing cord having a sufficient breaking load to be used in a tire belt structure, in particular in a belt structure of a high performance tire.

According to a further preferred embodiment, said composite material has a tensile modulus, measured according to Standard ASTM D3916-02, at 23°C, not lower than or equal to 20 GPa, preferably of from 30 GPa to 200 GPa.

According to a further preferred embodiment, said composite material has a specific gravity, measured according to Standard ASTM D792-00, lower than or equal to 3.0 g/cm³, preferably of from 1.0 g/cm³ to 2.5 g/cm³.

According to a further preferred embodiment, said polymeric material has a flexural modulus, measured according to Standard ASTM D790-03, at 23°C, not lower than or equal to 0.5 GPa, preferably of from 2.0 GPa to 25 GPa.

According to a further preferred embodiment, said polymeric material has an ultimate tensile strength, measured according to Standard ASTM D638-03, at 23°C, not lower than or equal to 40 MPa, preferably of from 50 MPa to 200 MPa.

According to a further preferred embodiment, said polymeric material may be selected, for example, from thermoplastic resins, thermosetting resins, or mixtures thereof. Thermosetting resins are particularly preferred.

According to a further preferred embodiment, said thermoplastic resins may be selected, for example, from: polyamides (such as, for example, nylon-6,6, nylon-6, nylon-4,6), polyesters (such as, for example, polyethylene terephthalate, polyethylene naphthalate), polyether ether ketones, polycarbonates, polyacetals, or mixtures thereof. Polyethylene tetrephthalate is particularly preferred.

According to a further preferred embodiment, said thermosetting resins may be selected, for example, from: vinyl-ester resins, epoxy resins, unsaturated polyester resins (such as, for example, isophthalic polyester resins), phenolic resins, melamine resins, polyimide resins, bismaleimide resins, furan resins, silicone resins, allyl resins, or mixtures thereof. Vinyl ester resins, epoxy resins, or mixtures thereof, are particularly preferred.

According to one preferred embodiment, said elongated fibers have an ultimate tensile strength, measured according to Standard ASTM D885-03, not lower than or equal to 1500 MPa, preferably of from 1800 MPa to 4000 MPa.

According to a further preferred embodiment, said elongated fibers have a tensile modulus, measured according to Standard ASTM D885-03, not lower than or equal to 50 GPa, preferably of from 60 GPa to 250 GPa.

According to a further preferred embodiment, said elongated fibers may be selected, for example, from: glass fibers, aromatic polyamide fibers (for example, aramid fibers such as, for example, Kevlar^{®}), polyvinyl alcohol fibers, carbon fibers, or mixtures thereof. Glass fibers are particularly preferred. Glass fibers of type "E" are even particularly preferred.

According to one preferred embodiment, said elongated fibers are present in the composite material in an amount of from 30% by weight to 95% by weight, preferably of from 50% by weight to 90% by weight, with respect to the total weight of the composite material.

Advantageously, said composite material may be manufactured continuously by pultrusion. This is a known technique which comprises unwinding elongated fibers (i.e. fibers of unlimited length) from a reel, and dipping them into a polymeric material (i.e. a resin) bath to impregnate them. For example, when thermosetting resins are used, the fibers are passed through a liquid resin, or through a liquid mixture of its monomers and/or oligomers, and the thus impregnated fibers are passed through a die to give a desired shape to the composite material and to remove excessive uncured resin liquid and bubbles entrapped in the bundle. Then, the obtained composite material is passed through a tubular mold where it is heated to form a semi-cured composite material. Subsequently, the obtained semi-cured composite material is subjected to a further curing by means, for example, of UV radiation, or heating, to complete the curing reaction. When thermoplastic resins are used, the composite material may be produced according to the same manner as in the case of using the thermosetting resins, in which a bath of melted resins may be used as a liquid bath. Optionally, resin powder may be previously sprinkled around the fibers to promote the impregnation. Optionally, a further coating layer of thermoplastic resin, preferably selected from those above disclosed, may be applied to the obtained composite material. To this aim, the composite material is passed through a bath of melted resin and the thus impregnated composite material is passed through a die to obtain said coating layer.

As reported above, said composite material comprises a plurality, generally of the order of several hundreds, of elongated fibers (i.e. fibers of unlimited length) of a diameter of several microns, these elongated fibers all being side by side and, therefore, substantially parallel to each other, except for a few overlaps. Although it is in fact impossible to guarantee that the fibers will be arranged absolutely perfectly in parallel, the expression substantially parallel to each other" is intended to indicate that said fibers are not intentionally twisted or braided and that said fibers are arranged parallel, except for the geometric accuracy of the arrangement.

Examples of composite materials which may be used according to the present invention and are available commercially, are the products known by the name of Glassline^{®} Getev from Tecniconsult S.p.A., Twintex^{®} from Saint-Gobain Vetrotex.

Optionally, in order to improve its adhesion to the elastomeric material, said first elongated element may be surface-treated by dipping it into a solution containing a mixture of resorcinol-formaldehyde resin and a rubber latex (this mixture being commonly denoted by the expression "resorcinol-formaldehyde latex RFL"), and subsequently drying them. The latex used may be selected, for example, from: vinylpyridine/styrene-butadiene (VP/SBR), styrene-butadiene (SBR), latex of natural rubber (NR), carboxylated and hydrogenated acrylonitrile-butadiene (X-HNBR), hydrogenated acrylonitrile (HNBR), acrylonitrile (NBR), ethylene-propylene-diene monomer (EPDM), chlorosulfonated polyethylene (CSM), or a mixture thereof.

Optionally, said first elongated element may be impregnated with an adhesive in a solvent medium for obtaining an additional layer covering the fibers. Preferably, the adhesive in a solvent medium is a blend of polymers, possibly halogenated polymers, organic compounds, such as isocyanates, and mineral fillers, such as carbon black. The additional layer, forming a ring around said elongated elements, is particularly advantageous for ensuring good adhesion to certain types of rubber, such as acrylonitrile (NBR), hydrogenated acrylonitrile (HNBR), carboxylated hydrogenated acrylonitrile (X-HNBR), vulcanizable hydrogenated acrylonitrile (ZSC), chlorosulfonated polyethylene (CSM), alkylated chlorosulfonated polyethylene (ACSM), ethylenepropylene-diene monomer (EPDM), or mixtures thereof.

According to one preferred embodiment, said at least one second elongated element comprises at least one preformed elementary metal wire. Preferably, said preformed elementary metal wire is preformed in one plane.

Preferably, said elementary metal wire is preformed so that it assumes a wave-shaped configuration so that it is substantially devoid of sharp edges and/or discontinuities in curvature along their longitudinal extension. Said feature is particularly advantageous since the absence of said sharp edges results in a favourable increasing of the breaking load of the elementary metal wire.

Particularly preferred is a preforming according to substantially sinusoidal undulations. Preferably, said sinusoidal undulations have a wavelength of from 2.5 mm to 30 mm, and more preferably of from 5 mm to 25 mm. Preferably, said sinusoidal undulations have a wave amplitude of from 0.12 mm to 1 mm.

In an alternative embodiment, the elementary metal wire is not preformed in a plane but, for example, is helically preformed.

In order to obtain said preformed elementary metal wire, it is possible to use any one of the methods known in the art. For example, it is possible to use toothed-wheel devices of the type illustrated in United States Patent US 5,581,990, or to use the device described in International Patent Application WO 00/39385.

According to one preferred embodiment, said second elongated element is made of steel or an alloy thereof. Usually, the breaking strength of a standard NT (normal tensile) steel ranges from 2600 N/mm² (or 2600 MPa) to 3200 N/mm², the breaking strength of a HT (High Tensile) steel ranges from 3000 N/mm² to 3600 N/mm², the breaking strength of a SHT (Super High Tensile) steel ranges from 3300 N/mm² to 3900 N/mm², the breaking strength of a UHT (Ultra High Tensile) steel ranges from 3600 N/mm² to about 4200 N/mm². Said breaking strength values depend in particular on the quantity of carbon contained in the steel.

According to a further embodiment, said tire includes a belt structure comprising at least one belt layer comprising at least one reinforcing cord according to the present invention, and at least one reinforcing cord made of metal, preferably of steel.

According to a further embodiment, said tire includes a belt structure comprising at least one belt layer comprising at least one reinforcing cord according to the present invention, and at least one reinforcing elongated element made of a composite material, said composite material including a plurality of elongated fibers embedded in a polymeric material (i.e. a monofilament of composite material). Said composite material, said polymeric material and said elongated fibers are the same above disclosed.

According to a further embodiment, said tire includes a belt structure comprising at least one belt layer comprising a plurality of reinforcing cord made of metal, in particular of steel, and at least one belt layer comprising at least one reinforcing cord according to the present invention.

Said reinforcing cords are usually embedded in an elastomeric composition according to well known techniques. Usually, said elastomeric composition comprises elastomeric polymers, as well as other additives such as, for eaxmple, fillers (e.g., carbon black, silica), vulcanizing agents (e.g., sulfur), activators, accelerators, plasticizing, used in the tyre industry. Examples of elastomeric polymers that may be advantageously used are: natural rubber (NR), epoxidized natural rubber (ENR); homopolymers and copolymers of butadiene, of isoprene or of 2-chlorobutadiene, such as, for example, polybutadiene (BR), polyisoprene (IR), styrene-butadiene (SBR), nitrile-butadiene (NBR), polychloroprene (CR); butyl rubbers (IIR), halogenated butyl rubbers (XIIR); ethylene/propylene copolymers (EPM); ethylene/propylene/nonconjugated diene (such as, for example, norbornene, cyclooctadiene or dicyclopentadiene) terpolymers (EPDM); or blends thereof. A person skilled in the art will be capable of determining which elastomeric polymers as well as which additives to use depending on the cahracteristics of the final manufactured product that it is desired to obtain.

Preferably, the belt layer according to the present invention is employed in tires which are suitable for "HP" (High Performance) or "UHP" (Ultra High Performance) tires, i.e. tires capable of sustaining a maximum speed of at least 210 Km/h, preferably over 240 Km/h, even more preferably over 270 Km/h. Example of said tires are those belonging to Classes "H", "V", "W", "Y", "Z" and "ZR".

### Brief description of the drawings

The features and advantages of the present invention will be made apparent by the following detailed description of some exemplary embodiments thereof, provided merely by way of non-limitative examples, description that will refer to the attached drawings, wherein:
- Fig. 1 shows a cross sectional view of a tire according to an embodiment of the present invention;
- Fig. 2 shows a perspective view of a reinforcing cord according to an embodiment of the present invention;
- Fig. 3 shows a perspective view of a reinforcing cord according to a further embodiment of the present invention;
- Fig. 4 shows a perspective view of a rubberized reinforcing layer according to an embodiment of the present invention;
- Fig. 5 shows a perspective view of a rubberized reinforcing layer according to a further embodiment of the present invention;
- Fig. 6 shows a perspective view of a rubberized reinforcing layer according to a further embodiment of the present invention.

### Detailed description of the preferred embodiments

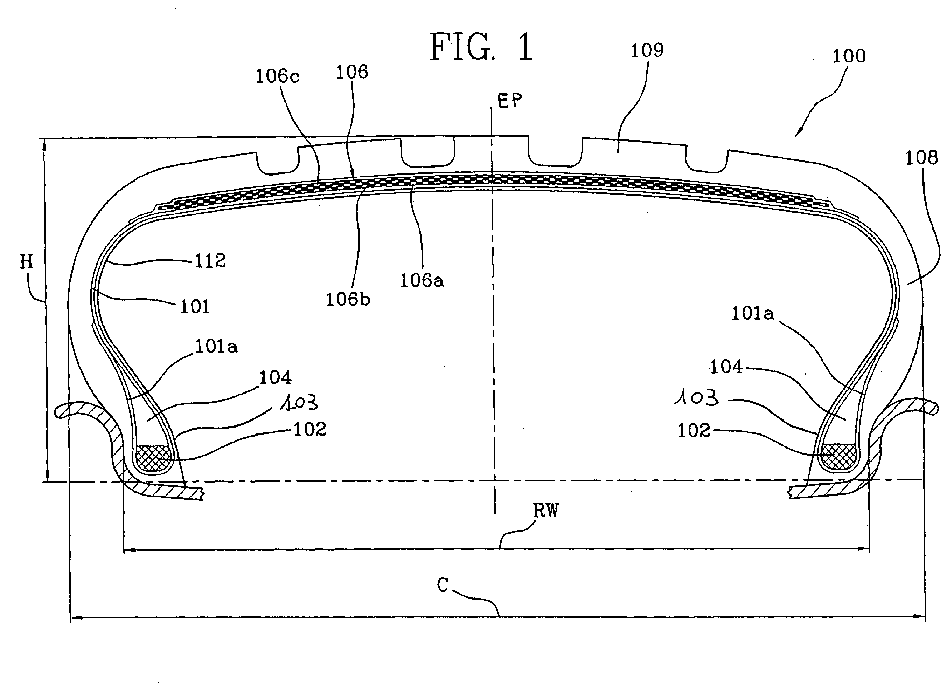

With respect to Fig. 1 the following definitions are given:
- "equatorial plane" (EP) is the plane perpendicular to the tire rotational axis and containing the axial centerline of the tire;
- "aspect ratio" is the ratio of the tire cross-section height (H), i.e. the radial distance from the nominal diameter (RW) to the outer diameter of the tire at its equatorial plane, divided by the tire cross-section width (C), i.e. the maximum linear distance parallel to the tire rotation axis between the outer surfaces of the sidewalls (the above dimensions are determined according to the ETRTO Standard).

The tire (100) comprises at least one carcass ply (101), the opposite lateral edges of which are associated with respective bead structures (103) comprising at least one bead core (102) and at least one bead filler (104). The association between the carcass ply (101) and the bead core (102) is achieved here by turning back the opposite lateral edges of the carcass ply (101) around the bead core (102) so as to form the so-called carcass tum-up (101a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-up around said annular inserts, the coupling being provided by a second carcass ply (not represented in Fig. 1) applied externally over the first.

The carcass ply (101) generally comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The bead core (102) is enclosed in a bead structure (103), defined along an inner circumferential edge of the tire (100), with which the tire engages on a rim forming part of a vehicle wheel. The space defined by each carcass turn-up (101a) contains a bead filler (104) and a bead core (102).

A belt structure (106) is applied along the circumference of the carcass ply (101). In the particular embodiment of Fig. 1, the belt structure (106) comprises two belt layers (106a, 106b) which incorporates a plurality of reinforcing cords according to the present invention, said reinforcing cords comprising a core including at least one first elongated element comprising at least one composite material, said composite material including a plurality of fibers embedded in a polymeric material, said core being wrapped with at least one second elongated element comprising at least one elementary metal wire. Preferably, said first elongated element is made of a plurality of elongated glass fibers embedded in a vinyl ester resin. Preferably, said second elongated element is made of a single elementary steel wire (i.e. a monofilament).

Preferably, said steel wire is provided with a coating of corrosion resistant alloy, e.g., a brass coating, usually having a thickness of from 0.10 µm to 0.30 µm. Said coating ensures better adhesion of the reinforcing cords to the rubberizing compound and provides for protection against corrosion of the metal, both during production of the tire and during use thereof.

Said reinforcing cords are usually embedded in an elastomeric composition according to well known techniques.

Preferably, said reinforcing cords are parallel to each other in each belt layer (106a, 106b) and intersecting with respect to the adjacent belt layer, inclined preferably in a simmetrical manner with respect to the equatorial plane (EP) of the tire (100) at an angle of from 10° to 45°, preferably of from 12° to 40°, and coated by means of a crosslinked elastomeric composition.

Preferably, the end counts of said reinforcing cords in each belt layer (106a, 106b) is of from 30 cords/dm to 160 cords/dm, preferably of from 50 cords/dm to 100 cords/dm.

Preferably, said reinforcing cord may have the same end counts along the transversal direction of each belt layer (106a, 106b). Alternatively, the reinforcing cords may have variable end counts along the transversal direction of each belt layer (106a, 106b). For example, the end counts may be greater near the outer edges of each belt layer (106a, 106b) than at a central zone of each belt layer (106a, 106b).

Alternatively, at least one of the belt layers (106a, 106b) may comprise at least one reinforcing cord according to the present invention, and at least one reinforcing cord made of metal, preferably of steel. Said reinforcing cord may be disposed along the transversal direction of the belt layer (106a, 106b) according to different arrangement, said arrangement being the same of different, preferably the same, in each belt layer (106a, 106b). For example, said reinforcing cords may be disposed in an alternated sequence such as: one reinforcing cord according to the present invention, one reinforcing cord made of metal, i.e. 1:1 sequence. Alternatively, said alternated sequence may be the following: two reinforcing cord according to the present invention, one reinforcing cord made of metal, i.e 2:1 sequence.

Alternatively, at least one of the belt layers (106a, 106b) may comprise at least one reinforcing cord according to the present invention, and at least one reinforcing cord made of one elongated element made of a composite material, said composite material including a plurality of elongated fibers embedded in a polymeric material (i.e. a monofilament of composite material). Said reinforcing cord may be disposed along the transversal direction of the belt layer (106a, 106b) according to different arrangement, said arrangement being the same of different, preferably the same, in each belt layer (106a, 106b). For example, said reinforcing cords may be disposed in an alternated sequence such as: one reinforcing cord according to the present invention, one monofilament of composite material, i.e 1:1 sequence. Alternatively, said alternated sequence may be the following: two reinforcing cord according to the present invention, one monofilament of composite material, i.e 2:1 sequence.

In a further embodiment, the belt layer (106) comprises at least one belt layer comprising a plurality of reinforcing cord made of metal, in particular of steel, and at least one belt layer comprising at least one reinforcing cord according to the present invention.

Particularly in "HP" or "UHP" tires, on the radially outermost belt layer (106b) is advantageously applied at least one zero-degree reinforcing layer (106c), commonly known as a "0° belt", which generally incorporates a plurality of reinforcing cords, typically textile cords, arranged at an angle of a few degrees relative to a circumferential direction, and coated with a crosslinked elastomeric composition.

A tread band (109) is applied circumferentially in a position radially external to the belt structure (106). Sidewalls (108) are also applied externally onto the carcass ply (101), this sidewall extending, in an axially external position, from the respective bead structure (103) to the edge of the tread band (109).

A tread underlayer may be placed between the belt structure (106) and the tread band (109) (not represented in Fig. 1). Said tread underlayer may have uniform thickness. Alternatively, said tread underlayer may have a variable thickness in the transversal direction. For example, the thickness may be greater near its outer edges than at a central zone.

Said tread underlayer usually extends over a surface substantially corresponding to the surface of development of said belt structure (106). Alternatively, said tread underlayer extends only along at least one portion of the development of said belt structure (106), for instance at opposite side portions of said belt structure (106).

A strip made of elastomeric material, commonly known as a "mini-sidewall", may optionally be present in the connecting zone between the sidewalls (108) and the tread band (109) (not represented in Fig. 1), this mini-sidewall generally being obtained by co-extrusion with the tread band and allowing an improvement in the mechanical interaction between the tread band (109) and the sidewalls (108). Alternatively, the end portion of the sidewall (108) directly covers the lateral edge of the tread band (109).

A stiffness of the tire sidewall (108) may be improved by providing the tire bead structure (103) with a reinforcing layer generally known as "flipper" (not represented in Fig. 1).

The flipper is a reinforcing layer which is wound around the respective bead core (102) and bead filler (103) so as to at least partially envelope them, said reinforcing layer being arranged between the carcass ply (101) and the bead structure (103). Usually the flipper is in contact with said carcass ply (101) and bead structure (103).

The flipper usually comprises a plurality of elongated reinforcing elements that are embedded in a crosslinked elastomeric composition, said reinforcing elements being made of textile materials (e.g., aramide or rayon), or of metallic materials (e.g., steel cord).

The tire bead structure (103) may comprise a further reinforcing layer which is generally known with the term of "chafer" (not represented in Fig. 1) and which has the function of increasing the stiffness of the bead structure (103).

The chafer usually comprises a plurality of elongated reinforcing elements which are embedded in a crosslinked elastomeric composition and which are generally made of textile materials (e.g., aramide or rayon), or of metallic materials (e.g., steel cord).

Usually, the chafer may be placed in a plurality of positions inside of the tire bead structure (103) and/or sidewall (108). Preferably, the chafer may be placed between the flipper and the carcass ply (101). Alternatively, the chafer may be placed in correspondence of the flipper external leg portion. Alternatively, the chafer may be placed in a position axially external with respect to the carcass ply (101), thus extending in proximity of the flipper external leg portion. Alternatively, the chafer may be placed in a position axially internal with respect to the carcass ply (101), thus extending in proximity of the flipper internal leg portion.

In case the tire is provided with two carcass plies, the chafer may be placed between said carcass plies. Preferably, the chafer may be placed between the carcass plies in proximity of the flipper internal leg portion. Alternatively, the chafer may be placed between the carcass plies in proximity of the flipper external leg portion.

Alternatively, the chafer may be placed in a position axially external with respect to the carcass plies, thus extending in proximity of the flipper external leg portion. Alternatively, the chafer may be placed in a position axially internal with respect to the carcass plies, thus extending in proximity of the flipper internal leg portion.

Usually, the chafer starts in correspondence of the radially external portion of the bead core (102), it follows the perimetral profile of the bead filler (104) and ends in correspondence of the tire sidewall (108). Alternatively, the chafer may extend along the tire sidewall (108), up to the ends of the tire belt structure (106).

In the case of tubeless tires, a rubber layer (112) generally known as a liner, which provides the necessary impermeability to the inflation air of the tire, may also be provided in an inner position relative to the carcass ply (101).

Preferably, the tire (100) according to the present invention has an aspect ratio (H/C), lower than or equal to 0.65, preferably lower than or equal to 0.45, even more preferably lower than or equal to 0.35. Low aspect ratio values are advantageously used in "HP" and "UHP" tires.

The process for producing the tire according to the present invention may be carried out according to techniques and using apparatus that are known in the art, said process including manufacturing the green tire, and subsequently moulding and vulcanizing the green tire.

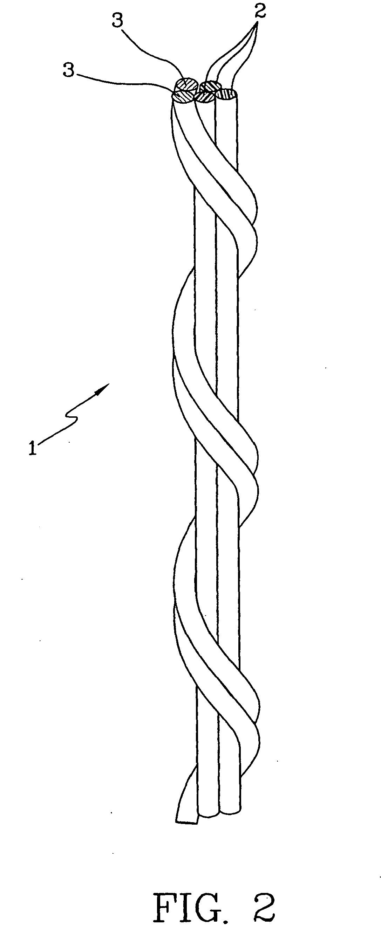

Fig. 2 shows a perspective view of a reinforcing cord according to one embodiment the present invention. The reinforcing cord (1) comprises a core made of three first elongated elements (2) arranged in parallel, said core being wrapped with two second elongated elements (3), said two second elongated element (3) being parallely wound in the same direction around said core. Preferably, each one of said three first elongated elements is made of a plurality of elongated glass fibers embedded in a vinyl ester resin. Preferably, each one of said second elongated elements is made of a single elementary steel wire (i.e. a monofilament).

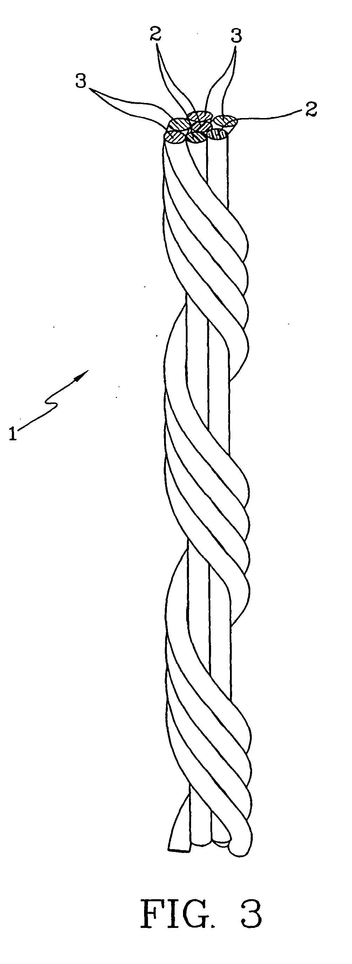

Fig. 3 shows a perspective view of a reinforcing cord according to a further embodiment of the present invention. The reinforcing cord (1) comprises a core including three first elongated elements (2) arranged in parallel, said core being wrapped with four second elongated elements (3), said four second elongated elements being) being parallely wound in the same, direction around said core. Preferably, each one of said three first elongated elements is made of a plurality of elongated glass fibers embedded in a vinyl ester resin. Preferably, each one of said second elongated elements is made of a single elementary steel wire (i.e. a monofilament).

The process for producing the reinforcing cords according to the present invention may be carried out according to techniques and using apparatus that are known in the art, such as those usually used in the manufacturing of steel cords.

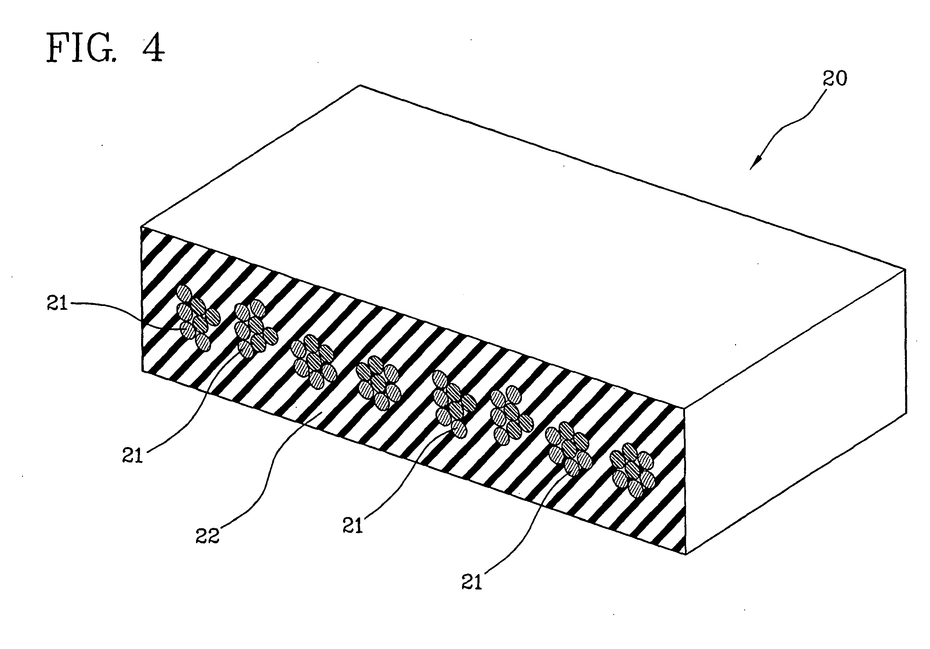

Fig. 4 shows a perspective view of a rubberized reinforcing layer (20) according to the present invention. The rubberized reinforcing layer (20) comprises a plurality of reinforcing cords (21) according to the present invention, said reinforcing cords being embedded into an elastomeric composition (22). As represented in Fig. 4, said reinforcing cords (21) are the same represented in Fig. 3.

Preferably, the end counts of said reinforcing cords (21) in said rubberized reinforcing layer (20) is of from 30 cords/dm to 160 cords/dm, preferably of from 50 cords/dm to 100 cords/dm.

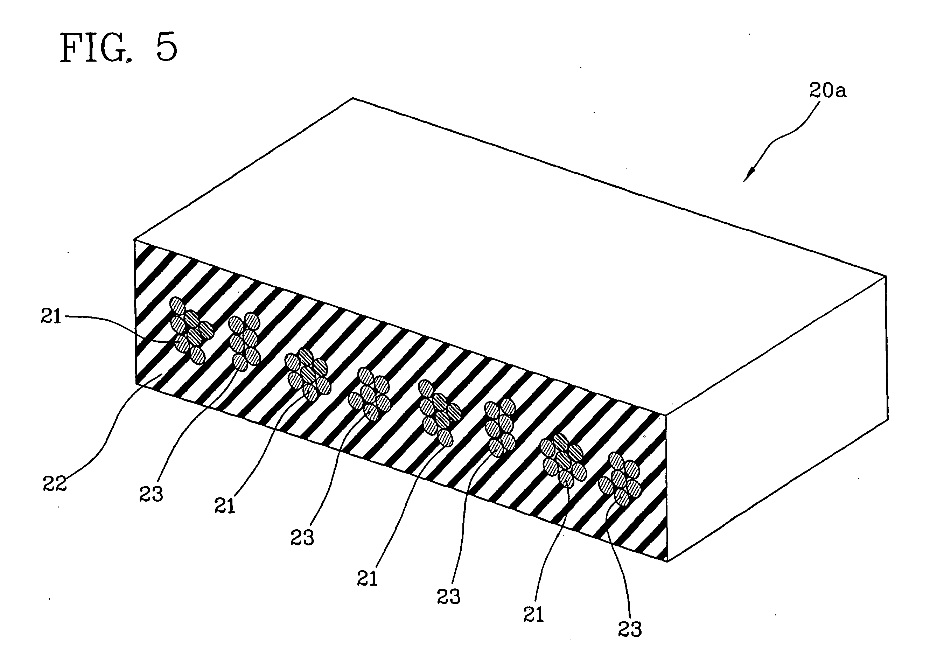

Fig. 5, shows a further embodiment of a rubberized reinforcing layer (20a) according to the present invention. The rubberized reinforcing layer (20) comprises a plurality of reinforcing cord (21) according to the present invention, and a plurality of reinforcing cord (23) made of metal, preferably of steel, said reinforcing cords (21, 23) being embedded into an elastomeric composition (22). Said reinforcing cords (21, 23) may be disposed along the transversal direction of the rubbereized reinforcing layer according to different arrangement. Said reinforcing cord (23) may be of the following type: 2+4x0.22.

As represented in Fig. 5, the alternated sequence of said reinforcing cords (21, 23) is 1:1. Alternatively, said alternated sequence may be 2:1 (not represented in Fig. 5).

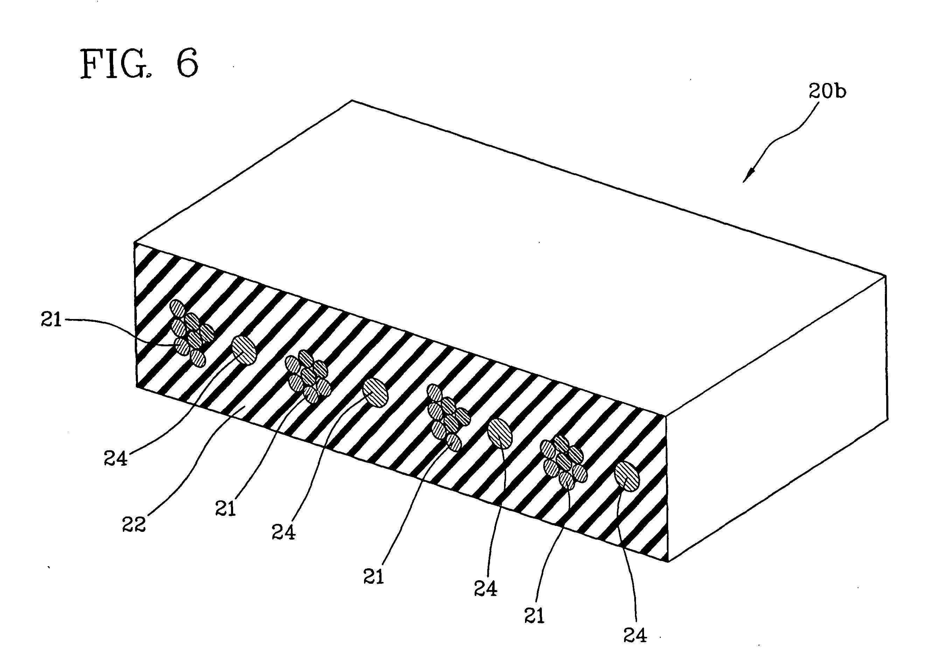

Fig. 6, shows a further embodiment of a rubberized reinforcing layer (20b) according to the present invention. The rubberized reinforcing layer comprises at least one reinforcing cord (21) according to the present invention, and at least one reinforcing elongated element (24) made of a composite material, said composite material including a plurality of elongated fibers embedded in a polymeric material (i.e. a monofilament of composite material), said reinforcing cords (21, 24) being embedded into an elastomeric composition (22). Said reinforcing cords (21, 24) may be disposed along the transversal direction of the reinforcing layer (20b) according to different arrangement.

As represented in Fig. 6, the alternated sequence of said reinforcing cords (21, 24) is 1:1. Alternatively, said alternated sequence may be 2:1 (not represented in Fig. 5).

The present invention will be further illustrated below by means of a number of illustrative embodiments, which are given for purely indicative purposes and without any limitation of this invention.

### EXAMPLES 1-4

Four different reinforcing cords having the following characteristics were tested:
Example 1 (comparative): 2+4x0.22 11.5 mm/13.5 mm SZ reinforcing steel cord;
Example 2 (comparative): 4x0.22 12.5 mm S reinforcing steel cord;
Example 3 (invention): 3x0.25/2x0.22 Inf./10 mm S reinforcing cord according to the present invention having a core made of three elongated elements, arranged in parallel, made of Glassline^{®} Getev 025/101 which is a composite material made of elongated glass fibers of type "E" (80% by weight) embedded in a vinyl ester resin (20% by weight) (commercialized by Tecniconsult S.p.A.) having the following characteristics:
   - flexural modulus, measured according to Standard D790-03, at 23°C, of 48 GPa;
   - ultimate tensile, strength measured according to Standard ASTM D3916-02, at 23°C, of 1450 MPa;
   - tensile modulus, measured according to Standard ASTM D3916-02, at 23°C, of 50 GPa;
   - specific gravity, measured according to Standard ASTM D792-00, of 2.1 g/cm³; said core being wrapped with two elementary steel wires arranged in parallel, at a stranding pitch of 10 mm S;
Example 4 (invention): 3x0.25/4x0.22 Inf./12.5 mm S reinforcing cord according to the present invention having a core made of three elongated elements, arranged in parallel, made of Glassline^{®} Getev 025/101 which is a composite material made of vinyl ester resin (20% by weight), glass fibers of type "E" (80% by weight) (commercialized by Tecniconsult S.p.A.) having the following characteristics:
   - flexural modulus, measured according to Standard D790-03, at 23°C, of 48 GPa;
   - ultimate tensile, strength measured according to Standard ASTM D3916-02, at 23°C, of 1450 MPa;
   - tensile modulus, measured according to Standard ASTM D3916-02, at 23°C, of 50 GPa;
   - specific gravity, measured according to Standard ASTM D792-00, of 2.1 g/cm³; said core being wrapped with four elementary steel wires arranged in parallel, at a stranding pitch of 12.5 mm S.

**TABLE 1**

| EXAMPLE | CORD DIAMETER⁽¹⁾ (mm) | BREAKING LOAD⁽²⁾ (N) | TABER STIFFNESS⁽³⁾ (tsu) | ELONGATION AT BREAK⁽⁴⁾ (%) | WEIGHT⁽⁵⁾ (Ktex) |
|---|---|---|---|---|---|
| 1 (*) | 0.70 | 660 | 19.0 | 1.70 | 1.80 |
| 2 (*) | 0.53 | 450 | 12.5 | 1.75 | 1.20 |
| 3 | 0.55 | 360 | 12.7 | 1.71 | 0.85 |
| 4 | 0.75 | 540 | 18.8 | 1.63 | 1.47 |

| | | | | | |
|---|---|---|---|---|---|
| (*): comparative; ⁽¹⁾: measured according to method BISFA E10; ⁽²⁾: measured according to method BISFA E6; ⁽³⁾: measured according to method BISFA E8; ⁽⁴⁾: measured according to method BISFA E6. ⁽⁵⁾: measured according to method BISFA E5. | | | | | |

The data reported in Table 1, clearly show that the reinforcing cords, having approximatively the same diameter, according to the present invention (Examples 3 and 4) have a lower weight with respect to the steel reinforcing cords according to comparative examples (Examples 1 and 2), as the remaining properties are not negatively influenced. In particular, taber stiffness and elongation at break remain substantially unchanged, while a sufficient breaking load is achieved.

Moreover, the above reported reinforcing cords were subjected to buckling resistance test which was measured by means of a pure momentum dynamometer, operating as reported by Simoni F. and Canevari C., in: "Compression and Flexion Measurements on Textile, Glass and Steel Cords" (1974), Paper No. 60, presented to "The Rubber Division of the American Chemical Society", Toronto, Ontario, Canada.

To this aim, a cord sample of Example 1 (comparative) and a cord sample of Example 4 (according to the present invention), each of said cord samples being previously rubberized by means of a laboratory extruder, was positioned onto a crosslinkable elastomeric material having a modulus at 100% elongation (100% Modulus) of 2.06±0.2 (said modulus being measured according to Standard ISO 37:2005), which was coupled with a steel tape. The cord sample ends and the steel tape ends were clamped and the so obtained test sample was vulcanized in a mould under predetermined vulcanizing conditions so as to obtain a single block.

After the vulcanization, one end of the obtained single block is fixed onto the pure momentum dynamometer in such a way as to prevent its rotation only and not its planar movement while the other end is fixed so as to prevent its planar movement only and not its rotation, i.e. said single block was subjected to a pure bending momentum.

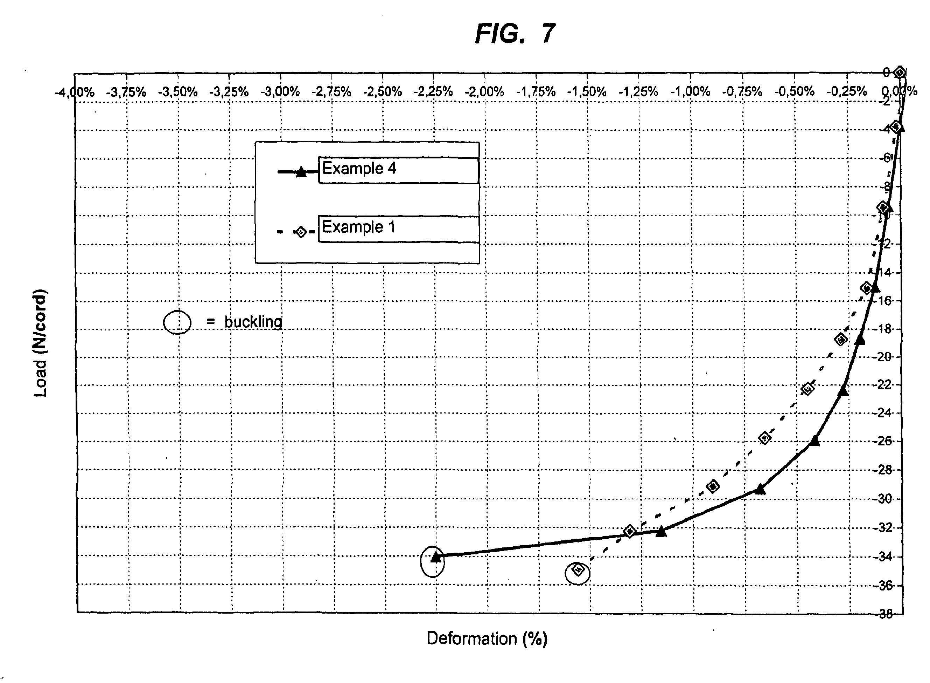

The obtained results were given in the enclosed Fig. 7 wherein in abscissa was indicated the deformation [in percentage (%)] which is given to each cord sample and in ordinates was indicated the load (N/cord) which is obtained from said deformation. Said results clearly show that there no significative difference between the two cord sample occurs. As a matter of fact, the buckling occurs when a load of -34 N/cord was applied in the case of the cord sample of Example 4 (according to the present invention) and of -35 N/cord in the case of the cord sample of Example 1 (comparative).

### EXAMPLES 5-6

Two rubberized reinforcing layers were produced by using the following cords:
cord A: cord of Example 1 (comparative);
cord B: cord of Example 4 (according to the present invention).

In more details, the following two rubberized reinforcing layers were obtained:
(1) a rubberized reinforcing layer (comparative layer 1) wherein the 100% of the cords embedded in the elastomeric material were the cords A; the end counts of the cords was 60 cords/dm; the thickness of the layer was 1.2 mm;
(2) rubberized reinforcing layer (invention layer 2) wherein the 100% of the cords embedded in the elastomeric material were the cords B; the end counts of the cords was 60 cords/dm; the thickness of the layer was 1.2 mm.

Samples of the above mentioned rubberized reinforcing layer having length of 500 mm and width of 100 mm, were weighted and the following total weight (g/m²) were found:
(1) comparative layer 1: 2340 g/m²;
(2) invention layer 2: 2090 g/m² (weight reduction of about 10% with respect to comparative layer 1.

## Claims

1. Tire comprising:
- a carcass structure of a substantially toroidal shape, having opposite lateral edges terminating in respective bead structures;
- a belt structure applied in a radially external position with respect to said carcass structure, said belt structure comprising at least one belt layer;
- a tread band radially superimposed on said belt structure;
- a pair of sidewalls applied laterally on opposite sides with respect to said carcass structure;
wherein said at least one belt layer comprises at least one reinforcing cord comprising a core including at least one first elongated element comprising at least one composite material, said composite material including a plurality of elongated fibers embedded in a polymeric material, said core being wrapped with at least one second elongated element comprising at least one elementary metal wire;
wherein said composite material has a flexural modulus, measured according to Standard ASTM D790-03, at 23°C, not lower than or equal to 10 GPa.

2. Tire according to claim 1, wherein said at least one reinforcing cord comprises a core including at least two first elongated elements arranged in parallel to each other.

3. Tire according to claim 1, wherein said at least one reinforcing cord comprises a core including at least three elongated elements arranged in parallel to each other.

4. Tire according to any one of the preceding claims, wherein said core is wrapped with at least two second elongated elements, each one of said at least two second elongated elements comprising at least one elementary metal wire.

5. Tire according to any one of claims 1 to 3, wherein said core is wrapped with at least four second elongated elements, each one of said at least four second elongated elements comprising at least one elementary metal wire.

6. Tire according to any one of the preceding claims, wherein said second elongated elements, are parallely wound, in the same direction, around said core.

7. Tire according to any one of the preceding claims, wherein said at least one second elongated element is made of a single elementary metal wire.

8. Tire according to any one of the preceding claims, wherein said first elongated element has a diameter of from 0.1 mm to 1.0 mm.

9. Tire according to any one of the preceding claims, wherin said second elongated element has a diameter of from 0.08 mm to 1.0 mm.

10. Tire according to any one of the preceding claims, wherein said reinforcing cord has a diameter of from 0.3 mm to 2.0 mm.

11. Tire according to any one of the preceding claims, wherein said second elongated element is wound around said core at a stranding pitch of from 2.5 mm to 30 mm.

12. Tire according to any one of the preceding claims, wherein said reinforcing cord has an elongation at break, measured on the bare cord, higher than or equal to 0.8%.

13. Tire according to any one of the preceding claims, wherein said reinforcing cord has a stiffness, measured on the bare cord, higher than or equal to 8 tsu.

14. Tire according to any one of the preceding claims, wherein said composite material has an ultimate tensile strength, measured according to Standard ASTM D3916-02, at 23°C, not lower than or equal to 600 MPa.

15. Tire according to any one of the preceding claims, wherein said composite material has a tensile modulus, measured according to Standard ASTM D3916-02, at 23°C, not lower than or equal to 20 GPa.

16. Tire according to any one of the preceding claims, wherein said composite material has a specific gravity, measured according to Standard ASTM D792-00, lower than or equal to 3.0 g/cm³.

17. Tire according to any one of the preceding claims, wherein said polymeric material has a flexural modulus, measured according to Standard ASTM D790-03, at 23°C, not lower than or equal to 0.5 GPa.

18. Tire according to any one of the preceding claims, wherein said polymeric material has an ultimate tensile strength, measured according to Standard ASTM D638-03, at 23°C, not lower than or equal to 40 MPa.

19. Tire according to any one of the preceding claims, wherein said polymeric material is selected from thermoplastic resins, thermosetting resins, or mixtures thereof.

20. Tire according to claim 19, wherein said thermoplastic resins are selected from: polyamides, polyesters, polyether ether ketones, polycarbonates, polyacetals, or mixtures thereof.

21. Tire according to claim 19, wherein said thermosetting resins are selected from: vinyl-ester resins, epoxy resins, unsaturated polyester resins, phenolic resins, melamine resins, polyimide resins, bismaleimide resins, furan resins, silicone resins, allyl resins, or mixtures thereof.

22. Tire according to any one of the preceding claims, wherein said elongated fibers have an ultimate tensile strength, measured according to Standard ASTM D885-03, not lower than or equal to 1500 MPa.

23. Tire according to any one of the preceding claims, wherein said elongated fibers have a tensile modulus, measured according to Standard ASTM D885-03, not lower than or equal to 50 GPa.

24. Tire according to any one of the preceding claims, wherein said elongated fibers are selected from: glass fibers, aromatic polyamide fibers, polyvinyl alcohol fibers, carbon fibers, or mixtures thereof.

25. Tire according to any one of the preceding claims, wherein said elongated fibers are present in the composite material in an amount of from 30% by weight to 95% by weight with respect to the total weight of the composite material.

## Patentansprüche

1. Reifen mit:
- einer Karkassenstruktur von einer im Wesentlichen ringförmigen Gestalt mit gegenüberliegenden Seitenkanten, die in jeweiligen Wulststrukturen enden,
- einer Gürtelstruktur, die an einer radial äußeren Position in Bezug auf die Karkassenstruktur aufgebracht ist, wobei die Gürtelstruktur wenigstens eine Gürtelschicht aufweist,
- einem Laufflächenband, das radial der Gürtelstruktur überlagert ist,
- einem Paar Seitenwände, die seitlich an gegenüberliegenden Seiten in Bezug auf die Karkassenstruktur aufgebracht sind,
wobei die wenigstens eine Gürtelschicht wenigstens einen Verstärkungscord mit einem Kern aufweist, der wenigstens ein erstes längliches Element enthält, das wenigstens ein Verbundmaterial aufweist, wobei das Verbundmaterial mehrere längliche Fasern aufweist, die in ein Polymermaterial eingebettet sind, wobei der Kern mit wenigstens einem zweiten länglichen Element umwickelt ist, das wenigstens einen elementaren Metalldraht aufweist,
wobei das Verbundmaterial ein Biegemodul, gemessen nach der Norm ASTM D790-03 bei 23°C, von nicht kleiner oder gleich 10GPa aufweist.

2. Reifen nach Anspruch 1, bei dem der wenigstens eine Verstärkungscord einen Kern aufweist, der wenigstens zwei erste längliche Elemente enthält, die parallel zueinander angeordnet sind.

3. Reifen nach Anspruch 1, bei dem der wenigstens eine Verstärkungscord einen Kern aufweist, der wenigstens drei längliche Elemente enthält, die parallel zueinander angeordnet sind.

4. Reifen nach einem der vorherigen Ansprüche, bei dem der Kern mit wenigstens zwei zweiten länglichen Elementen umwickelt ist, wobei jedes der wenigstens zwei zweiten länglichen Elemente wenigstens einen elementaren Metalldraht aufweist.

5. Reifen nach einem der Ansprüche 1 bis 3, bei dem der Kern mit wenigstens vier zweiten länglichen Elementen umwickelt ist, wobei jedes der wenigstens vier zweiten länglichen Elemente wenigstens einen elementaren Metalldraht aufweist.

6. Reifen nach einem der vorherigen Ansprüche, bei dem die zweiten länglichen Elemente parallel in der gleichen Richtung um den Kern gewunden sind.

7. Reifen nach einem der vorherigen Ansprüche, bei dem das wenigstens eine zweite längliche Element aus einem einzelnen elementaren Metalldraht hergestellt ist.

8. Reifen nach einem der vorherigen Ansprüche, bei dem das erste längliche Element einen Durchmesser zwischen 0,1mm und 1,0mm aufweist.

9. Reifen nach einem der vorherigen Ansprüche, bei dem das zweite längliche Element einen Durchmesser zwischen 0,08mm und 1,0mm aufweist.

10. Reifen nach einem der vorherigen Ansprüche, bei dem der Verstärkungscord einen Durchmesser zwischen 0,3mm und 2,0mm aufweist.

11. Reifen nach einem der vorherigen Ansprüche, bei dem das zweite längliche Element um den Kern mit einer Transpositionslänge zwischen 2,5mm und 30mm gewunden ist.

12. Reifen nach einem der vorherigen Ansprüche, bei dem der Verstärkungscord eine Reißdehnung, gemessen auf dem blanken Cord, von größer oder gleich 0,8% aufweist.

13. Reifen nach einem der vorherigen Ansprüche, bei dem der Verstärkungscord eine Steifigkeit, gemessen auf dem blanken Cord, von größer oder gleich 8 tsu aufweist.

14. Reifen nach einem der vorherigen Ansprüche, bei dem das Verbundmaterial eine Reißfestigkeit, gemessen nach der Norm ASTM D3916-02 bei 23°C, von nicht weniger oder gleich 600MPa aufweist.

15. Reifen nach einem der vorherigen Ansprüche, bei dem das Verbundmaterial ein Zugmodul, gemessen nach der Norm ASTM D3916-02 bei 23 °C, von nicht weniger oder gleich 20GPa aufweist.

16. Reifen nach einem der vorherigen Ansprüche, bei dem das Verbundmaterial eine Dichte, gemessen nach der Norm ASTM D792-00, von kleiner oder gleich 3.0g/cm³ aufweist.

17. Reifen nach einem der vorherigen Ansprüche, bei dem das Polymermaterial ein Biegemodul, gemessen nach der Norm ASTM D790-03 bei 23°C, von nicht kleiner oder gleich 0,5GPa aufweist.

18. Reifen nach einem der vorherigen Ansprüche, bei dem das Polymermaterial eine Reißfestigkeit, gemessen nach der Norm ASTM D638-03 bei 23°C, von nicht kleiner oder gleich 40MPa aufweist.

19. Reifen nach einem der vorherigen Ansprüche, bei dem das Polymermaterial aus thermoplastischen Harzen, thermisch aushärtenden Harzen oder Mischungen aus diesen ausgewählt ist.

20. Reifen nach Anspruch 19, bei dem die thermoplastischen Harze ausgewählt sind aus: Polyamiden, Polyestern, Polyetherketonen, Polykarbonaten, Polyacetale oder Mischungen aus diesen.

21. Reifen nach Anspruch 19, bei dem die thermisch aushärtenden Harze ausgewählt sind aus:
Vinylesterharzen, Epoxydharzen, ungesättigten Polyesterharzen, Phenolharzen, Melaminharzen, Polyimidharzen, Bismaleimidharzen, Furanharzen, Silikonharzen, Allylharzen oder Mischungen aus diesen.

22. Reifen nach einem der vorherigen Ansprüche, bei dem die länglichen Fasern eine Reißfestigkeit, gemessen nach der Norm ASTM D885-03, von nicht kleiner oder gleich 1500MPa aufweisen.

23. Reifen nach einem der vorherigen Ansprüche, bei dem die länglichen Fasern ein Zugmodul, gemessen nach der Norm ASTM D885-03, von nicht kleiner oder gleich 50GPa aufweisen.

24. Reifen nach einem der vorherigen Ansprüche, bei dem die länglichen Fasern ausgewählt sind aus: Glasfasern, Fasern aus aromatischen Polyamiden, Fasern aus Polyvinylalkohol, Kohlefasern oder Mischungen aus diesen.

25. Reifen nach einem der vorherigen Ansprüche, bei dem die länglichen Fasern in dem Verbundmaterial in einer Menge von zwischen 30 Gewichtsprozent bis zu 95 Gewichtsprozent in Bezug auf das Gesamtgewicht des Verbundmaterials vorhanden sind.

## Revendications

1. Pneu comprenant :
- une structure de carcasse de forme sensiblement toroïdale, ayant des bords latéraux opposés se terminant par des structures de talon respectives ;
- une structure de ceinture appliquée en position radialement extérieure relativement à la structure de carcasse, ladite structure de ceinture comprenant au moins une couche de ceinture ;
- une bande de roulement superposée radialement sur la structure de ceinture ;
- une paire de flancs appliqués latéralement sur des côtés opposés relativement à la structure de carcasse ;
dans lequel l'au moins une couche de ceinture comprend au moins une corde de renfort comprenant une âme incluant au moins un premier élément allongé comprenant au moins un matériau composite, ce matériau composite incluant plusieurs fibres allongées noyées dans un matériau polymère, ce matériau composite ayant un module d'élasticité en flexion, cette âme étant enveloppée avec au moins un deuxième élément allongé comprenant au moins un fil métallique élémentaire ;
dans lequel ledit matériau composite a un module d'élasticité en flexion, mesuré selon la norme ASTM D790-03, à 23° C, qui n'est pas inférieur à ou est égal à 10 GPa.

2. Pneu selon la revendication 1, dans lequel l'au moins une corde de renfort comprend une âme comprenant au moins deux premiers éléments allongés disposés parallèlement entre eux.

3. Pneu selon la revendication 1, dans lequel l'au moins une corde de renfort comprend une âme comprenant au moins trois premiers éléments allongés disposés parallèlement entre eux.

4. Pneu selon l'une quelconque des revendications précédentes, dans lequel l'âme est enveloppée avec au moins deux deuxièmes éléments allongés, chacun des au moins deux éléments allongés comprenant au moins un fil métallique élémentaire.

5. Pneu selon l'une quelconque des revendications 1 à 3, dans lequel l'âme est enveloppée avec au moins quatre deuxièmes éléments allongés, chacun des au moins quatre éléments allongés comprenant au moins un fil métallique élémentaire

6. Pneu selon l'une quelconque des revendications précédentes, dans lequel les deuxièmes éléments allongés, sont enroulés parallèlement, dans la même direction, autour de l'âme.

7. Pneu selon l'une quelconque des revendications précédentes, dans lequel l'au moins un deuxième élément allongé est fait d'un unique fil métallique élémentaire.

8. Pneu selon l'une quelconque des revendications précédentes, dans lequel le premier élément allongé a un diamètre de 0,1 mm à 1,0 mm.

9. Pneu selon l'une quelconque des revendications précédentes, dans lequel le deuxième élément allongé a un diamètre de 0,08 mm à 1,0 mm.

10. Pneu selon l'une quelconque des revendications précédentes, dans lequel la corde de renfort a un diamètre de 0,3 mm à 2,0 mm.

11. Pneu selon l'une quelconque des revendications précédentes, dans lequel le deuxième élément allongé est enroulé autour de l'âme selon un pas de câblage de 2,5 mm à 30 mm.

12. Pneu selon l'une quelconque des revendications précédentes, dans lequel la corde de renfort présente un allongement à la rupture, mesuré sur la corde nue, supérieur à ou est égal à 0,8%.

13. Pneu selon l'une quelconque des revendications précédentes, dans lequel la corde de renfort a une raideur, mesurée sur la corde nue, supérieure à ou est égale à 8 tsu.

14. Pneu selon l'une quelconque des revendications précédentes, dans lequel le matériau composite a une contrainte de traction à la rupture, mesurée selon la norme ASTM D3916-02, à 23°C, qui n'est pas inférieure à ou est égale à 600 MPa.

15. Pneu selon l'une quelconque des revendications précédentes, dans lequel le matériau composite a un module de traction, mesuré selon la norme ASTM D3916-02, à 23 °C, qui n'est pas inférieur à ou est égal à 20 GPa.

16. Pneu selon l'une quelconque des revendications précédentes, dans lequel le matériau composite a une densité relative, mesurée selon la norme ASTM D792-00, inférieure ou égale à 3,0 g/cm³.

17. Pneu selon l'une quelconque des revendications précédentes, dans lequel le matériau polymère a un module de flexion, mesuré selon la norme ASTM D790-03, à 23°C, qui n'est pas inférieur à ou est égal à 0,5 GPa.

18. Pneu selon l'une quelconque des revendications précédentes, dans lequel le matériau polymère a une contrainte de traction à la rupture, mesurée selon la norme ASTM D638-03, à 23°C, qui n'est pas inférieure à ou est égale à 40 MPa.

19. Pneu selon l'une quelconque des revendications précédentes, dans lequel le matériau polymère est choisi parmi les résines thermoplastiques, les résines thermodurcissables, ou leurs mélanges.

20. Pneu selon la revendication 19, dans lequel les résines thermoplastiques sont choisies parmi : polyamides, polyesters, polyéthers éther kétones, polycarbonates, polyacétals, ou leurs mélanges.

21. Pneu selon la revendication 19, dans lequel les résines thermodurcissables sont choisies parmi : les résines vinyle-ester, les résines époxy, les résines polyester insaturées, les résines phénoliques, les résines mélamine, les résines polyimide, les résines bismaléimide, les résines furanne, les résines silicone, les résines allyle, ou leurs mélanges.

22. Pneu selon l'une quelconque des revendications précédentes, dans lequel les fibres allongées ont une résistance à la rupture en traction, mesurée selon la norme ASTM D885-03, qui n'est pas inférieure à ou est égale à 1500 MPa.

23. Pneu selon l'une quelconque des revendications précédentes, dans lequel les fibres allongées ont un module d'élasticité en traction, mesuré selon la norme ASTM D885-03, non inférieur ou égal à 50 GPa.

24. Pneu selon l'une quelconque des revendications précédentes, dans lequel les fibres allongées sont choisies parmi : les fibres de verre, les fibres de polyamide aromatique, les fibres de polyvinyle alcool, les fibres de carbone, ou leurs mélanges

25. Pneu selon l'une quelconque des revendications précédentes, dans lequel les fibres allongées sont présentes dans le matériau composite à raison de 30 % en poids à 95 % en poids par rapport au poids total du matériau composite.
